# EUROPEAN PATENT APPLICATION

(11) **EP 4 697 415 A1**
(43) Date of publication of application: **18.02.2026**
(21) Application number: 24787871.3
(22) Date of filing: 18.03.2024
(51) Int. Cl.: H01M 4/66

(54) **SECONDARY BATTERY AND ELECTRIC APPARATUS**

(30) Priority: 12.04.2023 CN 202310435889
(71) Applicant: Zhejiang Shengxing Technology Co., Ltd, Hangzhou, Zhejiang 311121 (CN)
(72) Inventor: SUN, Minghao, Hangzhou, Zhejiang 311604 (CN); LIU, Yanyan, Hangzhou, Zhejiang 311604 (CN)
(74) Representative: Finetti, Claudia
(86) International application number: PCT/CN2024/082261
(87) International publication number: WO 2024/212765

(57) **Abstract**

The present disclosure relates to a secondary battery and an electric apparatus, and provided thereby are a secondary battery, comprising a positive electrode sheet, an electrolyte, and a negative electrode sheet. The negative electrode sheet comprises a non-active negative electrode substrate layer composed of a metal or alloy of element A arranged on the negative electrode sheet. The electrolyte comprises an element B which is an active substance. The redox potential of the element B is lower than that of the element A. In the present disclosure, by means of configuring the negative electrode substrate layer to be the metal or alloy of element A having a certain surface density, the energy density of the battery can be increased and the manufacturing costs of the battery can be reduced, while achieving the excellent technical effects of eliminating the formation of dendrites of the metal element B on the surface of a negative electrode and avoiding the growth of the dendrites of the metal element B.

## Description

### Technical Field

The present disclosure relates to the field of secondary batteries, and in particular to liquid, semi-solid, and solid secondary batteries and electrical apparatuses.

### Background Art

Secondary batteries are important materials for electric energy transfer and have been widely used in new energy vehicles, portable electronic products, energy storage and other fields. Further increase of the energy density of lithium-ion batteries, as the most important secondary batteries at present, is limited by the low theoretical specific capacity of graphite. In contrast, metal negative electrodes have ultra-high theoretical specific capacity and extremely low redox potential, which is conducive to further increasing the energy density of batteries. Hence, metal negative electrodes have become the focus of researchers in recent years.

Currently, there are still some technical problems with direct use of metal negative electrodes in lithium secondary batteries, sodium secondary batteries, and other secondary batteries in commercial applications. A metal negative electrode is generally highly reactive, prone to chemical/electrochemical reactions with an electrolyte, resulting in rapid consumption of the metal negative electrode and the electrolyte, thereby reducing the coulombic efficiency of the battery. In addition, many metal ions have a tendency of oriented growth during reduction deposition, so that the metal tends to deposit in a manner of forming dendrites. This leads to huge volume deformation of the metal negative electrode during cycling, so that it's difficult to form a stable solid electrolyte interphase (SEI) on the surface of the metal negative electrode, and there is a risk that the metal dendrites may pierce the separator and lead to short circuit of the battery. In addition, the uneven deposition/stripping of metal ions leads to easy peeling of metal dendrites from the metal negative electrode body, and SEI blocks the pathway for electron transmission. This results in loss of active species, continuous loss of battery capacity and a high risk of battery explosion. Moreover, although SEI formed on the metal negative electrode during cycling is beneficial to prevent mutual consumption of the metal negative electrode and the electrolyte, a conventional electrolyte cannot generate a stable solid electrolyte interphase film on the metal negative electrode, and thus cannot provide long-term, high-efficiency protection for a battery having metal negative electrode. Therefore, there is an urgent need in the industry to develop a new battery material to address the above problems, so as to increase the energy density of a secondary battery, and inhibit occurrence of side reactions and formation of dendrites during cycling.

In some recent methods and reports, some researchers have also considered that the intrinsic deposition law of metallic lithium leads to the growth of lithium dendrites, and thus thought of interfering with the growth of metallic lithium dendrites by co-deposition of other ions. Although lithium has the most negative redox potential and ordinary ions are difficult to co-deposit with lithium ions, the redox potentials of sodium and lithium are relatively close. If lithium and sodium ions exist in the electrolyte at the same time, lithium ions and sodium ions are expected to co-deposit within a certain potential range, thereby breaking the intrinsic growth law of metallic lithium dendrites and abating or even eliminating the formation of dendrites. However, in the above reaction process, lithium and sodium elements act as active species together, and reversibly participate in charge transfer during the charge/discharge process of the battery. As a result, the preparation of the electrolyte is relatively complicated, and it's not easy to realize sustainable reactions. Chinese Patent Application CNl07093706A discloses a method for preparing a lithium battery negative electrode, which relates to the field of solid batteries and liquid batteries. This invention aims to solve the problems of low specific capacity, easy growth of dendrites, low first coulombic efficiency and low battery energy density of traditional graphite negative electrodes. The method includes the following steps: step 1, mixing 75% to 90% by mass of a carbon material, 5% to 20% by mass of a conductive agent, and 5% to 10% by mass of a binder in a certain ratio to form an adsorbent or porous intermediate material layer, and then coating the intermediate material layer on a current collector in a thickness of 1 µm to 70 µm; step 2, uniformly vapor-depositing a metal layer with a thickness of 1 µm to 30 µm on the intermediate material layer; step 3, after completing steps 1 and 2, connecting a tab to the current collector to complete the preparation of the battery negative electrode. It is used in the field of solid batteries and liquid batteries. However, the battery's negative electrode in the above patent application has the following disadvantages in terms of structure and preparation method: 1. The structure is complex. In order to inhibit the growth of lithium dendrites, the intermediate material layer of the negative electrode needs to play a role. As stated in paragraph 0022 of the specification thereof, it "uses the intermediate material layer to regulate the distribution of lithium ions on the negative electrode surface, so as to avoid aggregation of lithium ions in time and space, and achieve a uniform distribution of lithium ions on the negative electrode surface, thereby inhibiting the appearance of lithium dendrites. The structure of the negative electrode of the lithium battery can effectively inhibit the formation of lithium dendrites." 2. It is difficult to avoid the consumption of active lithium. For a lithium battery, the negative electrode protection film (i.e. SEI) is repeatedly regenerated during the use of the battery. In this patent application, as an active species, the metal layer covering the surface of the intermediate material layer cannot ensure that the negative electrode protection film does not consume lithium during the regeneration process, thereby reducing the capacity of the battery. 3. The intermediate material layer is located below the metal layer, which makes it difficult to effectively increase the specific surface area of the metal layer. As a result, the current density on the negative electrode surface is increased during the battery cycling, and it's easy to cause excessive formation of SEI and excessive passivation of the negative electrode by SEI.

Therefore, there is an urgent need in the art to develop a new secondary battery that can overcome the above technical deficiencies.

### Summary

In order to solve the problems with the prior art lithium secondary batteries, sodium secondary batteries and other secondary batteries, the present application provides a secondary battery made with a simple process, wherein a metal-containing inactive layer is used as a negative electrode base layer in the negative electrode plate, and another metal element with a redox potential lower than that of the at least one metal element contained in the inactive layer is used as an active species to reversibly participate in the electrochemical reactions, and optionally the specific surface area, shape and/or structure of the inactive layer is adjusted, or a negative electrode protection film or a negative electrode reinforcement film is introduced, so that the problems of dendrite growth on the negative electrode plate, high complexity of the existing processes, low conductivity and the like can be solved very well. The inactive negative electrode base layer acts to inhibit dendrite growth, protect the active species, and provide a raw material for formation and regeneration of the negative electrode protection film, thereby reducing consumption of the active species and increasing the service life of the battery.

In the present application, the active material undergoes valence changes and reversible electrochemical reactions during a charge/discharge process. The inactive layer is a functional auxiliary material for achieving uniform deposition of the active species and eliminating dendrite growth. This functional auxiliary material is a key material for forming the negative electrode protection film (SEI) and dynamically repairing the negative electrode protection film. Therefore, it is also one of the core foundations of the present disclosure. During the charge process, the ions of element B are reduced to the metallic form of element B, and during the discharge process, the metal of element B is oxidized to the ions of element B. Hence, the active material is element B. Specifically, element A is not intercalated into the positive electrode material, or element B is preferentially intercalated into the positive electrode material. Therefore, the ions of element A cannot be reversibly intercalated into and deintercalated out of the positive electrode material. That is, the ions of element A cannot reversibly participate in the electrochemical reactions during the charge/discharge process of the battery. In other words, they cannot reversibly participate in the charge/discharge of the battery.

The present disclosure provides a novel secondary battery and an electric apparatus, thereby overcoming the above technical deficiencies.

In one aspect, the present disclosure provides a secondary battery comprising a positive electrode plate, an electrolyte (including a liquid electrolyte, a semi-solid electrolyte, a solid electrolyte, or the like) and a negative electrode plate, wherein
the negative electrode plate comprises a negative electrode base layer comprising at least one inactive layer containing element A;
the electrolyte comprises element B as an active species;
wherein the element A is at least one of sodium, potassium, magnesium and calcium;
the element B is at least one of lithium, sodium, potassium, magnesium and calcium;
wherein the element B is different from the element A, and the element B has a lower redox potential than the element A.

In a preferred embodiment, the secondary battery further comprises an A-based negative electrode protection film located on at least a portion of a surface of the negative electrode base layer.

In another preferred embodiment, the A-based negative electrode protection film can conduct ions of the element B; and the negative electrode base layer provides a source of element A for formation and regeneration of the negative electrode protection film during repeated charge and discharge of the secondary battery.

In another preferred embodiment, the negative electrode plate further comprises a negative electrode reinforcement film located on at least a portion of a surface of the A-based negative electrode protection film, wherein a component(s) constituting the negative electrode reinforcement film is a species that does not chemically react with the electrolyte; further, a component(s) constituting the negative electrode reinforcement film is a species that neither chemically reacts with the electrolyte nor chemically reacts with a metal of the element B and/or the inactive layer containing the element A. The negative electrode reinforcement film can effectively increase the specific surface area of the metal negative electrode plate, reduce the current density of the negative electrode during the charge/discharge process, improve the electrode's charge/discharge ability and its tolerance to side reactions in the battery, reduce the thickness of the negative electrode protection film (SEI), prevent SEI from excessively passivating the negative electrode, and inhibit formation of metal dendrites. At the same time, the negative electrode reinforcement film can reduce the excessive formation of SEI under high temperature conditions and improve the capacity retention and electrochemical performance of the secondary battery at various temperatures.

In another preferred embodiment, the negative electrode plate satisfies at least one of the following conditions:
(1) a specific surface area S_{negative} of the negative electrode base layer satisfies 0.001m²/g≤S_{negative}≤100 m²/g;
(2) a surface roughness R_{negative} of the negative electrode base layer satisfies 0.01 µm≤R_{negative}≤250µm;
(3) a porosity K_{negative} of the negative electrode base layer satisfies 0%≤K_{negative}≤50%;
(4) a thickness d_{negative} of the negative electrode base layer satisfies: 2 µm ≤ d_{negative} ≤ 500 µm;
(5) an areal density C_{negative} of the negative electrode base layer satisfies: 0.2mg/cm²≤C_{negative}≤50mg/cm²;
(6) a median particle size D_{50negative} of particles of the negative electrode base layer satisfies 0.05µm≤D_{50negative}≤200µm;
(7) the negative electrode base layer has a striped structure, and a stripe has a minimum dimension in the range of 0.05 µm to 200 µm;
(8) an atomic percentage of the element A in the negative electrode base layer is between 10% and 100%; or
(9) a mass percentage of the element B in the negative electrode base layer is between 0% and 70%.

In another preferred embodiment, the inactive layer containing element A exists with the element B in any one of the following combinations: magnesium inactive layer and sodium element; magnesium inactive layer and lithium element; magnesium inactive layer and potassium element; magnesium inactive layer and calcium element; sodium inactive layer and potassium element; sodium inactive layer and lithium element; sodium inactive layer and calcium element; calcium inactive layer and potassium element; calcium inactive layer and lithium element; or potassium inactive layer and lithium element.

In another preferred embodiment, the secondary battery further comprises a separator, and a second negative electrode reinforcement film provided on at least a portion of the separator.

In another preferred embodiment, at least a portion of the separator itself is a second negative electrode reinforcement film.

In another preferred embodiment, the inactive layer containing element A is in the form of a lamellar structure, a strip structure, a three-dimensional structure, and/or a particle structure.

In another preferred embodiment, the negative electrode base layer further comprises element B dissolved in at least one inactive layer containing element A, and the element B is 0-70% by mass based on a total mass of the negative electrode base layer.

In another preferred embodiment, an active material of the positive electrode plate does not undergo a reversible electrochemical reaction with ions of element A or preferentially undergoes a reversible electrochemical reaction with ions of element B; preferably, the active material of the positive electrode plate is of a polyanion salt type, a metal oxide type or a compound type.

In another preferred embodiment, the electrolyte comprises at least one anion selected from fluoride-containing anions.

In another preferred embodiment, the electrolyte comprises at least one anion selected from bis(fluorosulfonyl)imide anion, hexafluorophosphate, bis(trifluoromethanesulfonyl)imide anion, difluorooxalatoborate, tetrafluoroborate, hexafluoroarsenate and difluorophosphate.

In another preferred embodiment, a solvent of the electrolyte is selected from at least one of ether compounds, acetal compounds, and ketal compounds.

In another preferred embodiment, the electrolyte has a concentration in the range of 0.5 mol/L to 7 mol/L.

In another aspect, the present disclosure provides an electric apparatus comprising the above secondary battery.

### Beneficial effects:

Compared with the prior art, the present application relies on an inactive negative electrode base layer containing element A (for example, a metallic sodium layer) as an inactive material layer to inhibit growth of metal dendrites (for example, metallic lithium dendrites) of the active species, namely element B, thereby protecting the active element B and reducing consumption of the element B. The process is simple, the structure is simple, and the time consumption is short. The regeneration of the A-based negative electrode protection film (for example, a sodium-based negative electrode protection film) reduces consumption of the active element B (for example, lithium) by consuming the element A (for example, sodium), and further, formation of dendrites can be eliminated. At the same time, the A-based negative electrode protection film can further enhance the miscibility between the metal of element A and the metal of element B while its ion conductivity for the active species is improved. The negative electrode base layer comprising the inactive layer containing element A provides a source of element A for the regeneration of the A-based negative electrode protection film, thereby reducing consumption of the active species, namely element B, in the secondary battery. Moreover, the negative electrode reinforcement film can increase the specific surface area of the negative electrode plate, and effectively reduce the current density on the negative electrode surface during battery cycling, thereby preventing SEI from excessively passivating the negative electrode plate, and optimizing the battery's capacity retention, rate capability and cycle stability. Moreover, unlike the prior art mechanism in which two or more metal elements are used together as active species to reversibly participate in the charge/discharge process of a battery and inhibit formation of metal dendrites, the element A in the present application does not act as an active species and does not participate in charge transfer during the charge/discharge process of the secondary battery. Thus, its valence state will not change reversibly during the charge/discharge process of the battery. According to the present disclosure, cations of a single metal are used as carriers, which is conducive to reducing the costs in the manufacturing, use and management of the battery. The ions of element A cannot be intercalated into the positive electrode material, or the ions of element B are preferentially intercalated into the positive electrode material. Therefore, the ions of element A cannot be reversibly intercalated into or deintercalated out of the positive electrode material. That is, the ions of element A cannot reversibly gain or lose electrons during the charge/discharge process of the battery. The negative electrode base layer comprising the inactive layer containing element A eliminates metal dendrites of element B through the mechanism of a primary cell and the formation of a BA alloy. The A-based negative electrode protection film has the effect of further eliminating dendrites. The negative electrode base layer comprising the inactive layer containing element A can also provide a source of element A for the regeneration of the A-based negative electrode protection film, thereby reducing consumption of the active species, namely element B, in the secondary battery.

These and other features and advantages will become apparent from a reading of the following detailed description taken in conjunction with the associated drawings. It is to be understood that both the foregoing general description and the following detailed description are illustrative only, and are not restrictive of the aspects as claimed.

### Description of the Drawings

FIG. 1 is a schematic view showing the layered structure of a negative electrode plate according to a specific embodiment of the present application, comprising at least one layer of an inactive species, namely the metal of element A or the alloy of element A, as a negative electrode base layer, and at least a portion of the negative electrode reinforcement film layer is embedded in the A-based negative electrode protection layer and/or the negative electrode base layer.
FIG. 2 is an SEM image of the negative electrode base layer after the battery cycling was completed in Example 3 of the present application.
FIG. 3 is an SEM image of the negative electrode base layer after the battery cycling was completed in Comparative Example 4 of the present application.

### Detailed Description

The present application will be described in detail below with reference to the accompanying drawings, and the features of the present application will be further revealed in the following specific description.

The ranges disclosed herein are defined with a lower limit and an upper limit. A given range is defined by selecting a lower limit and an upper limit, and the selected lower and upper limits define the boundaries of the particular range. The ranges defined this way may be inclusive or exclusive of the end values, and the end values may be combined arbitrarily, i.e., any lower limit may be combined with any upper limit to form a range.For example, if ranges of 60-120 and 80-110 are listed for a particular parameter, it is appreciated that ranges of 60-110 and 80-120 are also contemplated. Furthermore, if minimum range values of 1 and 2 are listed, and if maximum range values of 3, 4, and 5 are listed, then the following ranges are all contemplated: 1-3, 1-4, 1-5, 2-3, 2-4, and 2-5. In the present application, unless otherwise specified, the numerical range "a-b" is a simplified representation for any combination of real numbers between a and b, wherein a and b are both real numbers. For example, the numerical range "0-5" means that all real numbers between "0-5" have been listed herein, and "0-5" is just a simplified representation of these numerical combinations. In addition, when a parameter is characterized using an integer ≥ 2, it is equivalent to a disclosure that the parameter is, for example, an integer of 2, 3, 4, 5, 6, 7, 8, 9, 10, 11, 12, etc.

In the present application, unless otherwise specified, all embodiments and preferred embodiments mentioned herein can be combined with each other to form new technical solutions. In the present application, unless otherwise specified, all technical features and preferred features mentioned herein can be combined with each other to form new technical solutions.

In the present application, unless otherwise specified, the terms "include" and "comprise" mentioned herein may be open-ended or close-ended. For example, the terms "include" and "comprise" may mean that other components not listed may also be included or comprised, or that only the listed components are included or comprised.

As used herein, unless otherwise specified, the term "or" is inclusive. For example, the phrase "A or B" means "A, B, or both A and B". More specifically, the condition "A or B" is satisfied by any of the following conditions: A is true (or present) and B is false (or absent); A is false (or absent) and B is true (or present); or both A and B are true (or present).

It should be understood that, in the description of the present disclosure, the directional or positional relationship indicated by such terms as "center", "longitudinal", "lateral", "upper", "lower", "front", "back", "left", "right", "vertical", "horizontal", "top", "bottom", "inside", "outside" and the like is based on the directional or positional relationship shown in the accompanying drawings, only for the sake of facilitating description of the present disclosure and simplifying the description, rather than indicating or implying that the apparatus or element referred to must have a particular orientation, be configured or operated in a particular orientation. Therefore, it should not be construed that the present disclosure is limited thereby. In addition, the terms "first", "second", and the like are used for descriptive purposes only, and cannot be construed as indicating or implying relative importance or implicitly indicating the quantity of the indicated technical features. Therefore, the features defined with "first", "second" or the like may explicitly or implicitly include one or more of such features. In the description of the present disclosure, unless otherwise specified, "a plurality of" means two or more.

It should be noted that, in the description of the present disclosure, unless otherwise expressly specified and defined, the terms "provide", "couple" and "connect" should be interpreted in a broad sense. For example, connection may be a fixed connection, a detachable connection, or an integral connection; it may be a mechanical connection or an electrical connection; it may be a direct connection or an indirect connection through a medium; or it may be an internal communication between two elements. For those skilled in the art, the specific meanings of the above terms in the present disclosure may be understood based on specific circumstances.

In order to solve the problems of dendrite formation and active species consumption in the prior art metal negative electrodes during charge/discharge cycling, while maintaining the high energy density of the batteries, the present disclosure provides a negative electrode plate with an inactive layer of metal A or element A alloy as a negative electrode base layer. When the redox potential of element B is lower than that of element A, the negative electrode base layer of metal A or element A alloy can eliminate the metal dendrites of element B deposited on its surface. The negative electrode base layer containing element A is a source of element A in the negative electrode protection film. The negative electrode base layer is an inactive layer. By participating in the formation and regeneration of the negative electrode protection film, element A can reduce the consumption of active element B, and has the function of protecting element B. An active metal has a direct influence on the capacity of a battery, because it reversibly participates in charge transfer during the charge/discharge process of the battery. An inactive metal has no direct influence on the capacity of the battery, because it cannot reversibly participate in the electrochemical reactions during the charge/discharge process of the battery.

Since the redox potential of element B is lower than that of element A, when the metal of element B is deposited on the surface of the inactive layer containing element A in the form of dendrites, the metal dendrites of element B and the inactive layer containing element A form primary cells in local areas, which enables the metal of element B in the dendrites to dissolve in the form of ions and regain electrons from the surface of the inactive layer containing element A, so as to be reduced and deposited. At the same time, the miscibility between element B and element A is high, leading to mutual diffusion and fusion of element B and the inactive layer containing element A to form a uniform alloy. The final result observed is that, when the metal of element B is deposited on the surface of the inactive layer containing element A, no metal dendrites of element B are generated.

In the present disclosure, metal dendrites are eliminated based on the principle of a primary cell, thereby eradicating the possibility of metal dendrite formation at its foundation. According to the present disclosure, an inactive layer containing the metal of element A or an alloy of element A is used as a negative electrode base layer, and element B is used as an active species. When the ions of element B are deposited on the surface of the inactive layer containing element A in the form of dendrites, the metal dendrites of element B and the inactive layer containing element A form primary cells in local areas. The redox potential of element B is lower than that of element A. Driven by the redox potential difference between element A and element B, the metal dendrites of element B dissolve, and element B appears in the form of ions which obtain electrons from the surface of the inactive layer containing element A to be reduced and deposited. The metal of element A and the metal of element B are miscible with each other. The metal of element B deposited on the surface of the metal of element A or the alloy of element A can quickly diffuse and fuse with the inactive layer containing element A. The final result observed is that, when metal B deposits on the surface of the inactive layer containing element A, no metal dendrites of element B are generated. The present disclosure is based on a different mechanism than the prior art in which the ions of two or more metals act together as carriers to inhibit the formation of metal dendrites. The ions of element A in the present disclosure do not act as carriers to reversibly participate in charge transfer during the charge/discharge process of the battery. Element A eliminates the metal dendrites of element B through the mechanism of a primary cell and the formation of a BA alloy. According to the present disclosure, cations of a single metal are used as carriers, which is conducive to reducing the costs in the manufacturing, use and management of the battery.

In a first aspect of the present disclosure, there is provided a secondary battery, comprising a positive electrode plate, an electrolyte, and a negative electrode plate, wherein
the negative electrode plate comprises a negative electrode base layer comprising at least one inactive layer containing element A;
the electrolyte comprises element B as an active species;
wherein the element A is at least one of sodium, potassium, magnesium and calcium;
the element B is at least one of lithium, sodium, potassium, magnesium and calcium;
wherein the element B is different from the element A, and the element B has a lower redox potential than the element A.

In the present disclosure, the secondary battery further comprises an A-based negative electrode protection film located on at least a portion of a surface of the negative electrode base layer.

In the present disclosure, the A-based negative electrode protection film can conduct the ions of element B; at the same time, it can further promote the miscibility between the metal of element A and the metal of element B. The negative electrode base layer comprising the inactive layer containing element A provides a source of element A for the formation and regeneration of the negative electrode protection film during the charge/discharge process of the battery.

In the present disclosure, the negative electrode plate further comprises a negative electrode reinforcement film located on at least a portion of a surface of the A-based negative electrode protection film.

In the present disclosure, the negative electrode of the secondary battery should further satisfy at least one of the following conditions:
(i) The specific surface area S_{negative} of the negative electrode base layer satisfies 0.001m²/g≤S_{negative}≤100 m²/g, preferably 0.01m²/g≤S_{negative}≤50m²/g, 0.1m²/g≤S_{negative}≤30 m²/g, 1m²/g≤S_{negative}≤10 m²/g or any numerical range consisting of the various end values of the above ranges. When the specific surface area S_{negative} is controlled within the above ranges, the dissolution of the element B into the negative electrode base layer can be facilitated, which is conducive to the rapid fusion of the element B in the negative electrode base layer and improves the high current charge/discharge performance of the secondary battery. Moreover, a higher specific surface area is conducive to reducing the actual current density of the negative electrode during battery cycling, reducing the thickness of SEI, preventing SEI from excessively passivating the negative electrode, improving the fault tolerance of the negative electrode during production, manufacturing and use, and optimizing the battery's capacity retention, rate performance, and cycle stability.
(ii) The surface roughness of the negative electrode base layer R_{negative} satisfies 0.01 µm ≤R_{negative}≤ 250 µm, preferably 5 µm ≤R_{negative}≤ 50 µm. A higher roughness is conducive to increasing the specific surface area of the negative electrode, reducing the actual current density of the negative electrode plate, and preventing SEI from excessively passivating the negative electrode. Or
(iii) The porosity K_{negative} of the negative electrode base layer satisfies 0%≤K_{negative}≤50%, 5%<K_{negative}≤40%, 10%<K_{negative}≤30%, 20%<K_{negative}≤25% or any numerical range consisting of the various end values of the above ranges, preferably 0%<K_{negative}≤30%. A higher porosity is conducive to increasing the specific surface area of the negative electrode, promoting the diffusion of the electrolyte and ions, increasing the rate performance of the battery, preventing SEI from excessively passivating the negative electrode, and better inhibiting the formation of metal dendrites.

In the present disclosure, the areal density C_{negative} of the negative electrode base layer satisfies: 0.2mg/cm²≤C_{negative}≤50mg/cm², 1mg/cm²≤C_{negative}≤40mg/cm², 4mg/cm²≤C_{negative}≤25mg/cm², 7mg/cm²≤C_{negative}≤10mg/cm² or any numerical range consisting of the various end values of the above ranges, preferably 1mg/cm²≤C_{negative}≤10mg/cm², wherein C_{negative} is the areal density of the negative electrode base layer, and the unit is mg/cm².

In the present disclosure, the areal density of the negative electrode base layer needs to be controlled within the range of 0.2 to 50 mg/cm². If the areal density is too low, the negative electrode base layer cannot inhibit the generation of metal dendrites of element B effectively. If the areal density is too high, the thickness of the negative electrode base layer increases, and the ion diffusion distance and the resistance to ion diffusion increase, resulting in an increased battery impedance during the charge/discharge process. In turn, the fast charging capability will be reduced, and the energy density of the battery cell will become lower. By controlling the areal density of the negative electrode base layer within the above ranges, the fast charging capability of the battery can be promoted, and the generation of metal dendrites of element B can be inhibited, while ensuring that the energy density of the battery is not too low. C_{negative} may be adjusted mainly by controlling the coating machine parameters. For example, when extrusion coating is employed, the areal density may be controlled by controlling the coating gap, slit gap, flow path width, flow rate (pump speed), coating speed, etc.

In the present disclosure, the thickness d_{negative} of the negative electrode base layer satisfies: 2µm≤d_{negative}≤500µm, 10µm≤d_{negative}≤400µm, 20µm≤d_{negative}≤250µm, 50µm≤d_{negative}≤100µm or any numerical range consisting of the various end values of the above ranges, preferably 10µm≤d_{negative}≤100µm, wherein d_{negative} is the thickness of the negative electrode base layer, and the unit is µm.

In the present disclosure, the metal particles of element A are in the form of nanoparticles or microparticles, and the median particle size D_{50negative} satisfies 0.05µm≤D_{50negative}≤200µm, 0.5µm≤D_{50negative}≤150µm, 1µm≤D_{50negative}≤100µm, 10µm≤D_{50negative}≤50µm or any numerical range consisting of the various end values of the above ranges, preferably 1µm≤D_{50negative}≤100µm; wherein D_{50negative} is the median particle size of the particles constituting the negative electrode base layer, and the unit is µm.

In the present disclosure, smaller metal particles of element A can increase the specific surface area of the negative electrode base layer, promote the fusion of the metal of element A and the metal of element B, and thus further reduce the probability of forming metal dendrites of element B. If the particle size of the metal particles of element A is too large, the diffusion path of element B in the metal particles of element A becomes longer, and element B has to overcome a larger resistance to deintercalate out. Moreover, the metal particles of element A are prone to fracture, resulting in an increased internal resistance. The smaller the particle size of the metal particles of element A, the shorter the diffusion distance of element B when it is intercalated into the negative electrode, and the easier the intercalation. Moreover, the smaller the metal particles of element A, the more paths there are for intercalating and deintercalating element B, which is more conducive to increasing the speed of fusing the metal of element A and the metal of element B. Under high-rate charge/discharge conditions, the voltage hysteresis is smaller, that is, the high-current charge/discharge performance is better. However, if the particle size of the metal particles of element A is too small and the specific surface area of the negative electrode base layer in contact with the electrolyte is too large, more element A and electrolyte will be consumed in the formation of the SEI film during the first charge/discharge cycle. This will easily cause greater irreversible capacity loss.

In the present disclosure, the inactive layer containing element A exists with element B in any one of the following combinations: magnesium inactive layer and sodium element; magnesium inactive layer and lithium element; magnesium inactive layer and potassium element; magnesium inactive layer and calcium element; sodium inactive layer and potassium element; sodium inactive layer and lithium element; sodium inactive layer and calcium element; calcium inactive layer and potassium element; calcium inactive layer and lithium element; or potassium inactive layer and lithium element.

In the present disclosure, the secondary battery further comprises a separator, and a second negative electrode reinforcement film provided on at least a portion of the separator. The second negative electrode reinforcement film can further increase the specific surface area of the inactive layer containing element A, and further increase the fusion speed of the metal of element A and the metal of element B, thereby further avoiding the growth of dendrites.

In the present disclosure, at least a portion of the separator itself is a second negative electrode reinforcement film.

In the present disclosure, the negative electrode reinforcement film is a material that does not chemically react with the electrolyte. Preferably, the negative electrode reinforcement film may further be a material that does not chemically react with the electrolyte, the metal of element B, or the inactive layer containing element A. The negative electrode reinforcement film comprises at least one component selected from an elemental non-metal, an oxide (for example, aluminum oxide), a fluoride (for example, sodium fluoride), a carbide (for example, tungsten carbide), a carbon material (for example, carbon nanotubes), a nitride (for example, silicon nitride) and a silicide (for example, titanium silicide), and is at least partially embedded in the inactive layer. Preferably, the component of the negative electrode reinforcement film is sodium fluoride, lithium fluoride, aluminum oxide, boron nitride, carbon nanotubes, carbon black or a combination thereof.

In the present disclosure, the negative electrode reinforcement film may be pressed over the negative electrode base layer (or face the positive electrode plate) or under the negative electrode base layer (or face away from the positive electrode plate).

In the present disclosure, the negative electrode base layer may be present on the current collector of the negative electrode plate optionally in the form of a sheet or a layer, particles, a strip, or a three-dimensional structure. By further setting the shape of the negative electrode base layer, the contact area between the electrolyte and the negative electrode base layer can be increased, that is, the specific surface area of the negative electrode base layer can be increased, thereby further enhancing the ability of the negative electrode base layer to dissolve element B. According to the present disclosure, an inactive layer containing element A in the form of a sheet or a layer, particles, a strip, or a three-dimensional structure is used as the negative electrode base layer, thereby inhibiting the growth of metal dendrites of element B. At the same time, the negative electrode base layer has the advantages of large specific surface area and good electric conductivity, which can improve the battery's fault tolerance, cycle life and rate performance, and optimize the battery's capacity retention and cycle stability.

In the present disclosure, the negative electrode plate comprises a current collector for supporting the negative electrode base layer, for example, a copper foil, etc.

In the present disclosure, the metal particles of element A are distributed on the negative electrode base layer in a uniform or non-uniform manner. When the negative electrode base layer has a particle structure, the particle size distribution of the particles of the negative electrode base layer conforms to the statistical characteristics of a normal distribution.

In the present disclosure, the minimum dimension of the metal particles of element A or the strip structure is between 0.05 µm and 200 µm, between 0.5 µm and 150 µm, between 5 µm and 100 µm, between 30 µm and 50 µm, or any numerical range consisting of the various end values of the above ranges, preferably between 1 µm and 100 µm. When the negative electrode base layer has a strip structure, the minimum dimension is the thickness of the strip structure of the negative electrode base layer.

In the present disclosure, a certain amount of element B may be pre-dissolved in the negative electrode base layer, so that the negative electrode base layer further comprises element B dissolved in at least one inactive layer containing element A. Based on the total mass of the negative electrode base layer, the metal of element B is 0-70% by mass, 1-60% by mass, 10-50% by mass, 20-30% by mass, 0-10% by mass or any numerical range consisting of the various end values of the above ranges, preferably 0.1-50% by mass. The pre-dissolved element B can compensate for the loss of element B as the active species in the secondary battery during long-term cycling, and thus increase the cycle life of the secondary battery while ensuring that no metal dendrites of element B grow on the negative electrode.

In the present disclosure, based on the number of atoms in the negative electrode base layer, the fraction of element A is 10%-100%, 20%-90%, 30%-80%, 40%-70%, 50%-60%, 10%-15% or any numerical range consisting of the various end values of the above ranges, preferably 50%-100%. The use of an alloy of element A as the negative electrode is conducive to reducing the manufacturing cost of the negative electrode plate, further improving the ability of the negative electrode base layer to dissolve element B, further improving the ability of the negative electrode base layer to inhibit the growth of dendrites of element B, and further prolonging the cycle life of the secondary battery.

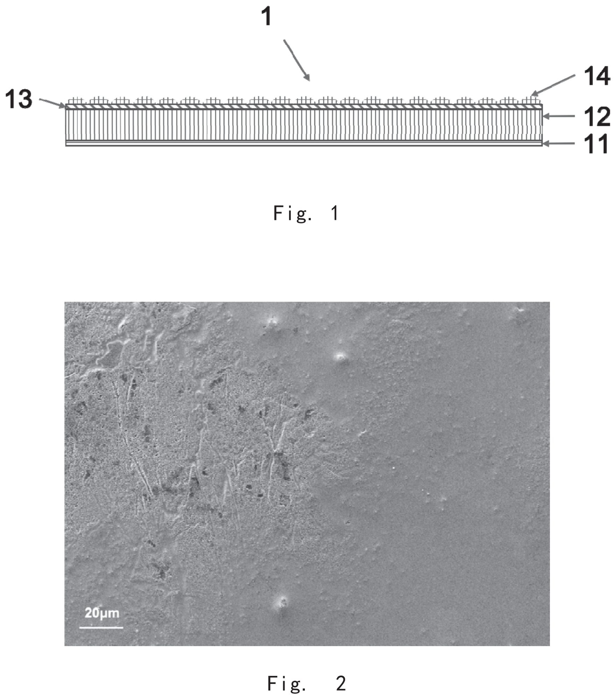

FIG. 1 is a schematic view showing the layered structure of a negative electrode plate according to a specific embodiment of the present application, comprising at least one layer of an inactive species, namely the metal of element A or the alloy of element A, as a negative electrode base layer, and at least a portion of the negative electrode reinforcement film layer is embedded in the A-based negative electrode protection layer and/or the negative electrode base layer.As shown by FIG. 1, the negative electrode plate 1 comprises a current collector 11, at least one inactive layer containing element A (negative electrode base layer) 12 formed on the surface of the current collector, an A-based negative electrode protection film 13 formed on at least a portion of the surface of the negative electrode base layer 12, and a negative electrode reinforcement film 14 formed on at least a portion of the surface of the A-based negative electrode protection film 13.

In the present disclosure, the active material of the positive electrode plate does not undergo a reversible electrochemical reaction with the ions of element A, or preferentially undergoes a reversible electrochemical reaction with the ions of element B. Preferably, the active material of the positive electrode plate is of a polyanion salt type, a metal oxide type or a compound type.

In the present disclosure, the electrolyte comprises a solvent and a fluorine-containing salt. The electrolyte comprises at least one anion selected from fluorine-containing anions; preferably, at least one selected from bis(fluorosulfonyl)imide anion, hexafluorophosphate, bis(trifluoromethanesulfonyl)imide anion, difluorooxalatoborate, tetrafluoroborate, hexafluoroarsenate and difluorophosphate.

In the present disclosure, the solvent of the electrolyte is selected from at least one of ether compounds, acetal compounds, and ketal compounds. In a preferred embodiment, the solvent is an ether solvent. More preferably, the solvent is at least one of ethylene glycol dimethyl ether, diethylene glycol dimethyl ether, triethylene glycol dimethyl ether, tetraethylene glycol dimethyl ether, polyethylene glycol dimethyl ether, ethylene glycol methyl ethyl ether, ethylene glycol diethyl ether, diethylene glycol methyl ethyl ether, diethylene glycol diethyl ether, triethylene glycol methyl ethyl ether, triethylene glycol diethyl ether, tetraethylene glycol methyl ethyl ether, tetraethylene glycol diethyl ether, ethylene glycol methyl propyl ether, ethylene glycol ethyl propyl ether, ethylene glycol dipropyl ether, diethylene glycol methyl propyl ether, diethylene glycol ethyl propyl ether, diethylene glycol dipropyl ether, triethylene glycol methyl propyl ether, triethylene glycol ethyl propyl ether, triethylene glycol dipropyl ether, tetraethylene glycol methyl propyl ether, tetraethylene glycol ethyl propyl ether, tetraethylene glycol dipropyl ether, ethylene glycol methyl butyl ether, ethylene glycol ethyl butyl ether, ethylene glycol propyl butyl ether, ethylene glycol dibutyl ether, diethylene glycol methyl butyl ether, diethylene glycol ethyl butyl ether, diethylene glycol propyl butyl ether, diethylene glycol dibutyl ether, triethylene glycol methyl butyl ether, triethylene glycol ethyl butyl ether, triethylene glycol propyl butyl ether, triethylene glycol dibutyl ether, tetraethylene glycol methyl butyl ether, tetraethylene glycol ethyl butyl ether, tetraethylene glycol propyl butyl ether, and tetraethylene glycol dibutyl ether. Preferred electrolyte solvents used in the present disclosure have low reactivity with the metal of element A.

In the present disclosure, the concentration of the electrolyte is 0.5 mol/L-7 mol/L, 1 mol/L-5 mol/L, 2 mol/L-4 mol/L, or any numerical range consisting of the various end values of the above ranges. In some embodiments of the present application, the electrolyte further comprises additives, including but not limited to: 1,3-dioxolane, 1,4-dioxane, 1,3,5-trioxane, lithium nitrate, lithium fluorosulfonate, sulfur dioxide, fluoroethylene carbonate, 12-crown-4, 15-crown-5 and 18-crown-6. In some embodiments, the additive is present in an amount of 0.1% to 20%, 1% to 15%, or 5% to 10% by mass in the electrolyte.

In a second aspect of the present disclosure, there is provided an electric apparatus, comprising the secondary battery.

### Secondary Battery

The secondary battery of the present application comprises a positive electrode (electrode plate), a negative electrode (electrode plate), an electrolyte, etc. During the charge/discharge process of the battery, active cations are intercalated and deintercalated back and forth between the positive and negative electrodes. The electrolyte serves to conduct ions between a positive electrode plate and a negative electrode plate.

### [Positive electrode plate]

In the secondary battery of the present application, the positive electrode plate comprises a positive electrode current collector, and a positive electrode film layer (or named a positive electrode active material layer) provided on at least one surface of the positive electrode current collector and comprising a positive electrode active material. For example, the positive electrode current collector has two opposite surfaces in its thickness direction, and the positive electrode film layer is provided on either or both of the two opposite surfaces of the positive electrode current collector. In the secondary battery of the present application, the positive electrode current collector may be a metal foil or a composite current collector. For example, the metal foil may be an aluminum foil, and the composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver and silver alloy, etc.) on a polymer material substrate (such as polypropylene PP, polyethylene terephthalate PET, polybutylene terephthalate PBT, polystyrene PS, polyethylene PE and copolymers thereof, etc.).

In the secondary battery of the present application, the positive electrode active material (species) may be one that is known in the art for secondary batteries. For example, the positive electrode active material may include one or more of the following: phosphates of an olivine structure, transition metal oxides, and modified compounds thereof. However, the present application is not limited to these materials, and other conventional materials that can be used as positive electrode active materials for secondary batteries may also be used, including but not limited to layered oxides containing the ions of element B, polyanionic materials or Prussian blue materials.

In some embodiments, the positive electrode film layer may further optionally comprise a binder. Non-limiting examples of the binder that may be used for the positive electrode film layer may include one or more of the following: polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylate resins. In an embodiment of the present application, the first positive electrode active material layer and/or the second positive electrode active material layer each independently includes a binder selected from polyvinylidene fluoride, polyacrylic acid, polytetrafluoroethylene, polyimide, and a combination thereof.

In some embodiments, the positive electrode film layer may optionally further comprise a conductive agent. Examples of the conductive agent used for the positive electrode film layer may include one or more of superconducting carbon, acetylene black, carbon black, Ketjen black, carbon dots, carbon nanotubes, graphene, and carbon nanofibers. In an embodiment of the present application, the first positive electrode active material layer and/or the second positive electrode active material layer independently comprises a conductive agent such as graphite, carbon black, acetylene black, graphene, carbon nanotubes, or a combination thereof.

In one embodiment of the present application, the positive electrode may be prepared in the following manner: the above-mentioned components for preparing the positive electrode, such as the positive electrode active material, the conductive agent, the binder and any other components, are dispersed in a solvent (such as N-methylpyrrolidone) to form a uniform positive electrode slurry; and the positive electrode slurry is coated on a positive electrode current collector. After drying, cold pressing and other processes, the positive electrode plate can be obtained.

### [Negative electrode plate]

In the secondary battery of the present application, the negative electrode plate does not exclude any other additional functional layer in addition to the negative electrode base layer. For example, in certain embodiments, the negative electrode plate of the present application may further include a conductive primer layer (for example, one consisting of a conductive agent and a binder) sandwiched between the negative electrode current collector and the negative electrode base layer and provided on the surface of the negative electrode current collector. In some other embodiments, the negative electrode plate of the present application may further include a cover protection layer covering the surface of the second negative electrode film layer.

In the secondary battery of the present application, the negative electrode current collector may be a metal foil or a composite current collector. For example, the metal foil may be a copper foil, a silver foil, an iron foil, or a foil made of an alloy of the above metals. The composite current collector may include a polymer material base layer and a metal layer formed on at least one surface of the polymer material base layer. It may be formed by forming a metal material (copper, copper alloy, nickel, nickel alloy, titanium, titanium alloy, silver and silver alloy, etc.) on a polymer material base layer (such as a base layer made of a material such as polypropylene PP, polyethylene terephthalate PET, polybutylene terephthalate PBT, polystyrene PS, polyethylene PE or a copolymer thereof).

### [Electrolyte]

The electrolyte conducts ions between the positive and negative electrode plates. The electrolyte may be selected from at least one of a solid electrolyte, a semi-solid electrolyte and a liquid electrolyte. In one embodiment of the present application, the electrolyte may optionally further include an additive. For example, the additive may include one or more of the following: negative electrode film-forming additives, and positive electrode film-forming additives. It may also include an additive that can improve certain battery properties, such as an additive that improves the overcharge performance of a battery, an additive that improves the high temperature performance of a battery, an additive that improves the low temperature performance of a battery, etc.

### [Separator]

In one embodiment of the present application, the secondary battery further includes a separator, which separates the anode side of the secondary battery from the cathode side, and provides selective permeability or blocking for substances of different types, sizes and charges in the system. For example, the separator may insulate electrons, and physically isolate the positive electrode from the negative electrode of the secondary battery, so as to prevent internal short circuit and form an electric field in a certain direction, while allowing ions in the battery to pass through the separator and move between the positive and negative electrodes. In one embodiment of the present application, the material used to prepare the separator may include one or more of glass fiber, non-woven fabric, polyethylene, polypropylene and polyvinylidene fluoride. The separator may be a monolayer film or a multilayer composite film. When the separator is a multilayer composite film, the materials of the layers may be the same or different. In an embodiment of the present application, the separator is selected from a polyolefin separator, a polyester separator, a polyimide separator, a polyamide separator and a cellulose separator.

In one embodiment of the present application, the positive electrode plate, the negative electrode plate and the separator may be made into an electrode assembly/bare cell by a winding process or a lamination process.

In one embodiment of the present application, the secondary battery may include an outer package, which may be used to encapsulate the electrode assembly and the electrolyte. In some embodiments, the outer package of the secondary battery may be a hard shell, such as a hard plastic shell, an aluminum shell, a steel shell, or the like. In some other embodiments, the outer package of the secondary battery may be a soft package, such as a pouch-type soft package. The material of the soft package may be plastic, such as one or more of polypropylene (PP), polybutylene terephthalate (PBT), polybutylene succinate (PBS), etc.

The shape of the secondary battery of the present application may be cylindrical, square or any other shape. The outer package may include a shell and a cover plate. The shell may include a bottom plate and side plates connected to the bottom plate. The bottom plate and the side plates are enclosed to form a receiving cavity. The shell has an opening in communication with the receiving cavity, and the cover plate may be provided to cover the opening, so as to close the receiving cavity. The positive electrode plate, the negative electrode plate and the separator may be formed into an electrode assembly by a winding process or a lamination process. The electrode assembly is encapsulated in the receiving cavity, and the electrode assembly is immersed in the electrolyte. The secondary battery may include one or more electrode assemblies.

In one embodiment of the present application, several secondary batteries may be assembled together to form a battery module. The battery module includes two or more secondary batteries, and the specific number of the secondary batteries depends on the application of the battery module and the parameters of an individual battery module.

In the battery module, a plurality of secondary batteries may be provided in sequence along the length direction of the battery module. Of course, they may also be arranged in any other manner. The plurality of secondary batteries may be further fixed with fasteners. Optionally, the battery module may further include a housing having an accommodation space, and the plurality of secondary batteries are accommodated in the accommodation space.

In one embodiment of the present application, two or more of the above-mentioned battery modules may be assembled into a battery pack, and the number of the battery modules contained in the battery pack depends on the application of the battery pack and the parameters of an individual battery module. The battery pack may include a battery box and a plurality of battery modules provided in the battery box. The battery box includes an upper box body and a lower box body. The upper box body can cover the lower box body and fit well with it to form a closed space for accommodating the battery modules. Two or more battery modules may be arranged in the battery box in a desired manner.

In one embodiment of the present application, an exemplary battery pack may include a battery box and a plurality of battery modules provided in the battery box. The battery box includes an upper box body and a lower box body. The upper box body is used to cover the lower box body and form a closed space for accommodating the battery modules. A plurality of battery modules may be arranged in the battery box in any manner.

### Electric apparatus

In one embodiment of the present application, the electric apparatus of the present application includes at least one of the secondary battery, battery module, or battery pack of the present application. The secondary battery, battery module, or battery pack may be used as a power source for the electric apparatus or as an energy storage unit for the electric apparatus. The electric apparatus includes but is not limited to a mobile digital device (such as a mobile phone, a laptop, etc.), an electric vehicle (such as a pure electric vehicle, a hybrid electric vehicle, a plug-in hybrid electric vehicle, an electric bicycle, an electric scooter, an electric golf cart, an electric truck, etc.), an electric train, a ship and a satellite, an energy storage system, or the like.

As another example, the apparatus may be a mobile phone, a tablet computer, a laptop computer, or the like. The apparatus is usually required to be lightweight and thin, and allows for the use of a secondary battery as a power source.

In the following, the influence of the secondary battery manufactured according to the embodiments of the present application on the performances of the electrochemical device is characterized based on specific Examples. However, it should be pointed out particularly that the protection scope of the present application is defined by the claims, not limited to the above specific embodiments.

### Examples

Unless otherwise specified, all raw materials used in the present disclosure were analytically pure and all water used was deionized water.

### 1. Preparation of positive electrode plate

10 wt% of polyvinylidene fluoride was dissolved in N-methylpyrrolidone as a binder, and 80 wt% of a polyanion salt-type positive electrode active material containing element B (see Tables 1-12 for details) and 10 wt% of conductive carbon black were added to prepare a uniformly dispersed positive electrode slurry. The positive electrode slurry was evenly coated on the surface of an aluminum foil current collector and transferred to a vacuum oven for full drying. The resulting positive electrode plate was rolled and punched to obtain a target positive electrode disc.

### 2. Preparation of negative electrode plate

In an Ar atmosphere, a powder of the metal of element A (see Tables 1-12 below for details), or the metal of element A and another alloy component was placed in a stainless steel crucible, heated until completely melted, fully stirred, and then cooled to obtain an inactive layer material containing element A.

The inactive layer material containing element A was compounded on the surface of a copper foil by cold pressing or hot pressing to obtain a negative electrode base layer having a layered structure. Alternatively, the inactive layer material containing element A was compounded on the surface of the copper foil by atomization spraying or sputtering to obtain a negative electrode base layer having a particle structure. Alternatively, the inactive layer material containing element A was compounded on the surface of the copper foil by extrusion to obtain a negative electrode base layer having a strip structure. Alternatively, the inactive layer material containing element A was compounded on the surface of the copper foil by atomization spraying or sputtering to obtain a negative electrode base layer having a three-dimensional structure.

The negative electrode reinforcement film material was compounded on the surface of the negative electrode base layer by cold pressing or hot pressing to obtain a negative electrode plate.

### 3. Preparation of separator

A porous polymer film of polypropylene was used as a separator.

### 4. Preparation of electrolyte

Under an Ar atmosphere, a fully dried fluorine-containing salt (see Table 12 for details, hexafluorophosphate, hexafluoroarsenate or tetrafluoroborate) or a fluorine-free salt (lithium nitrate) was dissolved in an organic solvent of ethylene glycol dipropyl ether and stirred thoroughly to prepare an electrolyte.

### 5. Preparation of button battery

The positive electrode plate, separator, and negative electrode plate were stacked in order, with the separator placed between the positive and negative electrode plates to play a separation role, and the electrolyte was added to finish the assembly of a button battery.

The button batteries of Examples 1-54 and Comparative Examples 1-24 were prepared according to the above preparation method.

As it can be seen from the test results of Example (Ex.) 1 to Example (Ex.) 4 in Table 1, when element A is sodium and element B is lithium (Example 1, Na-Li); element A is magnesium and element B is lithium (Example 2, Mg-Li), element A is calcium and element B is lithium (Example 3, Ca-Li), or element A is sodium and element B is calcium (Example 4, Na-Ca) (all satisfying the condition that the redox potential of element B is lower than that of element A), the negative electrode base layer containing element A can effectively inhibit the formation of metal dendrites of element B, and the secondary battery exhibits good cycle performance (characterized by the number of cycles, with <500 indicating "poor", 500-530 indicating "medium", and >530 indicating "excellent") and first-cycle coulombic efficiency (expressed as first-cycle efficiency). As it can be seen from the test results of Comparative Example (Cm. Ex.) 1 (Li-Na), when the redox potential of element B is higher than that of element A, the structure of the negative electrode base layer containing element A is unstable, the formation of metal dendrites of element B cannot be inhibited effectively, and the cycle life and first-cycle coulombic efficiency of the secondary battery decrease. As it can be seen from the test results of Comparative Example 2 (Cu-Li) and Comparative Example 3 (Mg-Zn), when element A is not one of sodium, potassium, magnesium, and calcium, and/or element B is not one of lithium, sodium, potassium, magnesium, and calcium, the negative electrode base layer containing element A cannot inhibit the generation of metal dendrites of element B, and the cycle life and first-cycle coulombic efficiency of the secondary battery decrease. As it can be seen from the test results of Comparative Example 4 (Li-Li) and Comparative Example 5 (Na-Na), when element A and element B are the same element, the generation of dendrites also cannot be inhibited effectively, which also leads to decrease in the cycle life and first-cycle coulombic efficiency of the secondary battery.

FIG. 2 is an SEM image of the negative electrode base layer after the battery cycling was completed in Example 3 of the present application. As shown by FIG. 2, there was almost no dendrite formed on the negative electrode base layer.

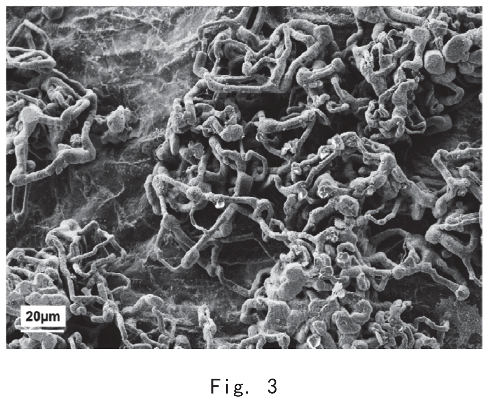

FIG. 3 is an SEM image of the negative electrode base layer after the battery cycling was completed in Comparative Example 4 of the present application. As shown by FIG. 3, a large number of dendrites were formed on the negative electrode base layer.

**Table 1**

| First-cycle efficiency | Cycle number | Sample | Element A | Element B | Areal density of negative electrode base layer (mg/cm²) | Structural form of negative electrode base layer | Electrolyte concentration (mol/L) |
|---|---|---|---|---|---|---|---|
| 94% | 591 | Ex. 1 | Na | Li | 5 | Layered | 2 |
| 93% | 562 | Ex. 2 | Mg | Li | 5 | Layered | 2 |
| 92% | 557 | Ex. 3 | Ca | Li | 5 | Layered | 2 |
| 90% | 534 | Ex. 4 | Na | Ca | 5 | Layered | 2 |
| 85% | 485 | Cm. Ex. 1 | Li | Na | 5 | Layered | 2 |
| 72% | 56 | Cm. Ex. 2 | Cu | Li | 5 | Layered | 2 |
| 86% | 466 | Cm. Ex. 3 | Mg | Zn | 5 | Layered | 2 |
| 89% | 320 | Cm. Ex. 4 | Li | Li | 5 | Layered | 2 |
| 90% | 353 | Cm. Ex. 5 | Na | Na | 5 | Layered | 2 |

As it can be seen from the test results of Examples 5 to 9 in Table 2 below, when element A is magnesium and element B is sodium (Example 5, Mg-Na), and the specific surface area of the negative electrode base layer is 0.001 m²/g; when element A is sodium and element B is lithium (Example 6, Na-Li), and the specific surface area of the negative electrode base layer is 0.1 m²/g; when element A is magnesium and element B is sodium (Example 7, Mg-Na), and the specific surface area of the negative electrode base layer is 1 m²/g; when element A is sodium and element B is lithium (Example 8, Na-Li), and the specific surface area of the negative electrode base layer is 10 m²/g; or when element A is sodium and element B is calcium (Example 9, Na-Ca), and the specific surface area of the negative electrode base layer is 100 m²/g, that is, when the specific surface area of the negative electrode base layer is in the range of 0.001 m²/g to 100 m²/g, the current density on the negative electrode surface is low, and excessive growth of the A-based negative electrode protection film and excessive passivation of the negative electrode will not be incurred. Instead, the fusion of element A and element B is rapid, and the formation of metal dendrites of element B is inhibited. As a result, the secondary battery has high first-cycle coulombic efficiency and ideal cycle performance. As it can be seen from the test results of Comparative Example 6 (Na-Li), when the specific surface area of the negative electrode base layer is too small (0.0001 m²/g), the current density of the negative electrode is large, which causes excessive growth of the A-based negative electrode protection film and excessive passivation of the negative electrode. Moreover, the fusion speed of element A and element B is low, and metal dendrites of element B form easily, resulting in a decrease in the first-cycle coulombic efficiency and cycle life of the battery. As it can be seen from the test results of Comparative Example 7 (Na-Ca), when the specific surface area of the negative electrode base layer is too large (150 m²/g), the formation of the A-based negative electrode protection film consumes too much electrolyte, such that the first-cycle coulombic efficiency and cycle life of the battery are decreased.

**Table 2**

| First-cycle efficiency | Cycle number | Sample | Element A | Element B | Specific surface area of negative electrode base layer (m²/g) | Structural form of negative electrode base layer | Electrolyte concentration (mol/L) |
|---|---|---|---|---|---|---|---|
| 90% | 505 | Ex. 5 | Mg | Na | 0.001 | Layered | 2 |
| 91% | 534 | Ex. 6 | Na | Li | 0.1 | Layered | 2 |
| 92% | 543 | Ex. 7 | Mg | Na | 1 | Layered | 2 |
| 94% | 591 | Ex. 8 | Na | Li | 10 | Layered | 2 |
| 90% | 512 | Ex. 9 | Na | Ca | 100 | Layered | 2 |
| 87% | 478 | Cm. Ex. 6 | Na | Li | 0.0001 | Layered | 2 |
| 88% | 482 | Cm. Ex. 7 | Na | Ca | 150 | Layered | 2 |

As it can be seen from the test results of Examples 10 to 14 in Table 3 below, when element A is magnesium and element B is potassium (Example 10, Mg-K), and the surface roughness of the negative electrode base layer is 0.01 µm; when element A is magnesium and element B is potassium (Example 11, Mg-K), and the surface roughness of the negative electrode base layer is 5 µm; when element A is sodium and element B is lithium (Example 12, Na-Li), and the surface roughness of the negative electrode base layer is 30 µm; when element A is sodium and element B is calcium (Example 13, Na-Ca), and the surface roughness of the negative electrode base layer is 50 µm; or when element A is sodium and element B is lithium (Example 14, Na-Li), and the surface roughness of the negative electrode base layer is 250 µm, that is, when the surface roughness of the negative electrode base layer is in the range of 0.01 µm to 250 µm, the current density on the negative electrode surface is low, and excessive growth of the A-based negative electrode protection film and excessive passivation of the negative electrode will not be incurred. Instead, the fusion of element A and element B is rapid, and the formation of metal dendrites of element B is inhibited. As a result, the secondary battery has high first-cycle coulombic efficiency and ideal cycle performance. As it can be seen from the test results of Comparative Example 8 (Na-Li), when the surface roughness of the negative electrode base layer is too low (0.005 µm), the current density of the negative electrode is large, which causes excessive growth of the A-based negative electrode protection film and excessive passivation of the negative electrode. Moreover, the fusion speed of element A and element B is low, and metal dendrites of element B form easily, resulting in a decrease in the first-cycle coulombic efficiency and cycle life of the battery. As it can be seen from the test results of Comparative Example 9 (Na-Ca), when the surface roughness of the negative electrode base layer is too large (350 µm), the specific surface area of the negative electrode base layer is large, and the formation of the A-based negative electrode protection film consumes too much electrolyte, such that the first-cycle coulombic efficiency and cycle life of the battery are decreased.

**Table 3**

| First-cycle efficiency | Cycle number | Sample | Element A | Element B | Surface roughness of negative electrode base layer (µm) | Structural form of negative electrode base layer | Electrolyte concentration (mol/L) |
|---|---|---|---|---|---|---|---|
| 90% | 509 | Ex. 10 | Mg | K | 0.01 | Layered | 2 |
| 92% | 534 | Ex. 11 | Mg | K | 5 | Layered | 2 |
| 94% | 591 | Ex. 12 | Na | Li | 30 | Layered | 2 |
| 93% | 567 | Ex. 13 | Na | Ca | 50 | Layered | 2 |
| 90% | 524 | Ex. 14 | Na | Li | 250 | Layered | 2 |
| 88% | 498 | Cm. Ex. 8 | Na | Li | 0.005 | Layered | 2 |
| 87% | 465 | Cm. Ex. 9 | Na | Ca | 350 | Layered | 2 |

As it can be seen from the test results of Examples 15 to 18 in Table 4 below, when element A is sodium and element B is lithium (Example 15, Na-Li), and the porosity of the negative electrode base layer containing element A is 0.10%; when element A is magnesium and element B is potassium (Example 16, Mg-K), and the porosity of the negative electrode base layer containing element A is 10%; when element A is sodium and element B is lithium (Example 17, Na-Li), and the porosity of the negative electrode base layer containing element A is 30%; or when element A is magnesium and element B is potassium (Example 18, Mg-K), and the porosity of the negative electrode base layer containing element A is 50%, that is, when the porosity of the negative electrode base layer containing element A is in the range of 0%-50%, the energy density of the battery is high; the negative electrode base layer does not consume too much electrolyte in the process of forming SEI; the solubility of element B in the negative electrode base layer is high; the ability of the negative electrode base layer to inhibit the formation of metal dendrites of element B is strong; the electrolyte and ions are highly diffusible in the negative electrode; and the battery has good cycle performance. As it can be seen from the test results of Comparative Example 10 (Na-Li), when the porosity of the negative electrode base layer containing element A is too high (60%), the energy density of the battery is low, and the negative electrode base layer consumes too much electrolyte in the process of forming SEI. As a result, the first-cycle coulombic efficiency and cycle capacity of the battery are decreased.

**Table 4**

| First-cycle efficiency | Cycle number | Sample | Element A | Element B | Porosity of negative electrode base layer | Electrolyte concentration (mol/L) | Areal density of negative electrode base layer (mp/cm²) |
|---|---|---|---|---|---|---|---|
| 93% | 563 | Ex. 15 | Na | Li | 0.01% | 2 | 5 |
| 91% | 523 | Ex. 16 | Mg | K | 10% | 2 | 5 |
| 90% | 531 | Ex. 17 | Na | Li | 30% | 2 | 5 |
| 89% | 502 | Ex. 18 | Mg | K | 50% | 2 | 5 |
| 87% | 489 | Cm. Ex. 10 | Na | Li | 60% | 2 | 5 |

As it can be seen from the test results of Examples 19 to 23 in Table 5, when element A is sodium and element B is lithium (Example 19, Na-Li), the areal density of the negative electrode base layer is 0.2 mg/cm², and the thickness of the negative electrode base layer is 2 µm; when element A is magnesium and element B is calcium (Example 20, Mg-Ca),the areal density of the negative electrode base layer is 1 mg/cm², and the thickness of the negative electrode base layer is 10 µm; when element A is sodium and element B is lithium (Example 21, Na-Li), the areal density of the negative electrode base layer is 5 mg/cm², and the thickness of the negative electrode base layer is 50 µm; when element A is magnesium and element B is calcium (Example 22, Mg-Ca), the areal density of the negative electrode base layer is 10 mg/cm², and the thickness of the negative electrode base layer is 100 µm; or when element A is sodium and element B is lithium (Example 23, Na-Li), the areal density of the negative electrode base layer is 50 mg/cm², and the thickness of the negative electrode base layer is 500 µm, that is, when the areal density of the negative electrode base layer is in the range of 0.2 mg/cm²-50 mg/cm² and the thickness of the negative electrode base layer is in the range of 2 µm-500 µm, the secondary battery has a higher energy density and good cycle performance, and the negative electrode base layer containing element A can effectively inhibit the formation of metal dendrites of element B. As it can be seen from the test results of Comparative Example 11 (Mg-Ca), when the areal density of the negative electrode base layer containing A is too low (0.05 mg/cm²), the negative electrode base layer is difficult to effectively inhibit the formation of metal dendrites of element B, and the cycle performance of the battery is deteriorated. As it can be seen from the test results of Comparative Example 12 (Na-Li), when the areal density of the negative electrode base layer containing A is too high (60 mg/cm²) and the thickness of the negative electrode base layer is too large (600 µm), the energy density of the battery is low, and the diffusion distance and diffusion resistance of element B dissolved in the negative electrode base layer increase, so that element B is difficult to fully participate in the cycle process of the battery, thereby deteriorating the cycle performance of the battery.

**Table 5**

| First-cycle efficiency | Cycle number | Sample | Structural form of negative electrode base layer | Element A | Element B | Thickness of negative electrode base layer (µm) | Areal density of negative electrode base layer (mp/cm²) |
|---|---|---|---|---|---|---|---|
| 90% | 501 | Ex. 19 | Layered | Na | Li | 2 | 0.2 |
| 93% | 568 | Ex. 20 | Layered | Mg | Ca | 10 | 1 |
| 94% | 591 | Ex. 21 | Layered | Na | Li | 50 | 5 |
| 92% | 545 | Ex. 22 | Layered | Mg | Ca | 100 | 10 |
| 88% | 409 | Ex. 23 | Layered | Na | Li | 500 | 50 |
| 72% | 75 | Cm. Ex. 11 | Layered | Mg | Ca | 0.5 | 0.05 |
| 85% | 376 | Cm. Ex. 12 | Layered | Na | Li | 600 | 60 |

As it can be seen from the test results of Examples 24 to 28 in Table 6 below, when element A is magnesium and element B is calcium (Example 24, Mg-Ca), and the particle size of the particles constituting the negative electrode base layer is 0.05 µm; when element A is magnesium and element B is calcium (Example 25, Mg-Ca), and the particle size of the particles constituting the negative electrode base layer is 1 µm; when element A is sodium and element B is lithium (Example 26, Na-Li), and the particle size of the particles constituting the negative electrode base layer is 50 µm; when element A is magnesium and element B is sodium (Example 27, Mg-Na) , and the particle size of the particles constituting the negative electrode base layer is 100µm; or when element A is sodium and element B is lithium (Example 28, Na-Li), and the particle size of the particles constituting the negative electrode base layer is 200µm, that is, when the particle size of the particles constituting the negative electrode base layer is in the range of 0.05µm to 200µm, the negative electrode base layer containing element A has a strong ability to dissolve element B, and the negative electrode base layer will not consume too much electrolyte when forming the negative electrode protection film containing element A, and has a strong ability to inhibit the formation of metal dendrites of element B. Thus, the battery has good cycle performance. As it can be seen from the test results of Comparative Example 13 (Mg-Na), when the particle size of the particles constituting the negative electrode base layer is too small (0.01 µm), the negative electrode base layer consumes too much electrolyte when forming the negative electrode protection film containing element A, thereby deteriorating the first-cycle coulombic efficiency and cycle performance of the battery. As it can be seen from the test results of Comparative Example 14 (Na-Li), when the particle size of the particles constituting the negative electrode base layer is too large, the diffusion distance and diffusion resistance of element B in the negative electrode base layer containing element A increase, the battery impedance increases, and the ability of the negative electrode base layer to inhibit the formation of metal dendrites of element B decreases, thereby deteriorating the cycle performance of the battery.

**Table 6**

| First-cycle efficiency | Cycle number | Sample | Structural form of negative electrode base layer | Element A | Element B | Particle size of negative electrode base layer (µm) | Areal density of negative electrode base layer (mg/cm²) |
|---|---|---|---|---|---|---|---|
| 89% | 503 | Ex. 24 | Particle | Mg | Ca | 0.05 | 5 |
| 92% | 537 | Ex. 25 | Particle | Me | Ca | 1 | 5 |
| 93% | 566 | Ex. 26 | Particle | Na | Li | 50 | 5 |
| 90% | 541 | Ex. 27 | Particle | Mg | Na | 100 | 5 |
| 90% | 514 | Ex. 28 | Particle | Na | Li | 200 | 5 |
| 87% | 490 | Cm. Ex. 13 | Particle | Mg | Na | 0.01 | 5 |
| 90% | 459 | Cm. Ex. 14 | Particle | Na | Li | 300 | 5 |

As it can be seen from the test results of Examples 29 to 32 in Table 7 below, when element A is sodium and element B is lithium (Example 29, Na-Li), and the material of the negative electrode reinforcement film is lithium fluoride; when element A is sodium and element B is lithium (Example 30, Na-Li), and the material of the negative electrode reinforcement film is sodium fluoride; when element A is magnesium and element B is potassium (Example 31, Mg-K), and the material of the negative electrode reinforcement film is carbon nanotube; or when element A is magnesium and element B is potassium (Example 32, Mg-K), and the material of the negative electrode reinforcement film is conductive carbon black, that is, when the component constituting the negative electrode reinforcement film is a substance that does not chemically react with the electrolyte, element B, or the inactive layer containing element A, the consumption rate of element B in the battery is low, and the negative electrode reinforcement film has a stable structure, thereby continuously increasing the specific surface area of the negative electrode base layer, stabilizing the surface state of the negative electrode base layer, inhibiting the formation of metal dendrites, reducing the actual current density of the negative electrode, and improving the cycle performance of the battery. As it can be seen from the test results of Comparative Example 15 (Na-Li), when the component of the negative electrode reinforcement film (aluminum powder) can react with element B, the consumption rate of element B in the battery is high, and the structure of the negative electrode reinforcement film is unstable, so that the structure of the negative electrode base layer is unstable, and the negative electrode is prone to forming dendrites, thereby deteriorating the cycle performance of the battery.

**Table 7**

| First-cycle efficiency | Cycle number | Sample | Element A | Element B | Negative electrode reinforcement film material | Areal density of negative electrode base layer (mg/cm²) | Electrolyte concentration (mol/L) |
|---|---|---|---|---|---|---|---|
| 93% | 602 | Ex. 29 | Na | Li | Lithium fluoride | 5 | 2 |
| 93% | 605 | Ex. 30 | Na | Li | Sodium fluoride | 5 | 2 |
| 89% | 521 | Ex. 31 | Mg | K | Carbon nanotube | 5 | 2 |
| 90% | 536 | Ex. 32 | Mg | K | Conducive carbon black | 5 | 2 |
| 67% | 53 | Cm. Ex. 15 | Na | Li | Aluminum powder | 5 | 2 |

As it can be seen from the test results of Examples 33 to 37 and Comparative Examples 16 to 17 in Table 8 below, when element A is sodium and element B is lithium (Example 33, Na-Li), and the negative electrode base layer has a striped structure with a minimum dimension of the stripes being 0.05 µm; when element A is magnesium and element B is calcium (Example 34, Mg-Ca), and the negative electrode base layer has a striped structure with a minimum dimension of the stripes being 1 µm; when element A is sodium and element B is lithium (Example 35, Na-Li), and the negative electrode base layer has a striped structure with a minimum dimension of the stripes being 50 µm; when element A is magnesium and element B is calcium (Example 36, Mg-Ca), and the negative electrode base layer has a striped structure with a minimum dimension of the stripes being 100 µm; or when element A is sodium and element B is lithium (Example 37, Na-Li), and the negative electrode base layer has a striped structure with a minimum dimension of the stripes being 200 µm, that is, when the negative electrode base layer has a strip structure with a minimum dimension of the strips in the range of 0.05 µm to 200 µm, the negative electrode base layer containing element A has a strong ability to dissolve element B, and the negative electrode base layer does not consume too much electrolyte in the process of forming SEI, and has a strong ability to inhibit the formation of metal dendrites of element B. Thus, the battery has higher first-cycle coulomb efficiency and better cycle performance. As it can be seen from the test results of Comparative Example 16 (Mg-Ca), when the minimum dimension of the stripes constituting the negative electrode base layer is too small (0.01 µm), the negative electrode base layer consumes too much electrolyte in the process of forming the negative electrode protection film containing element A, thereby decreasing the first-cycle coulombic efficiency of the battery and deteriorating the cycle performance. As it can be seen from the test results of Comparative Example 17 (Na-Li), when the minimum dimension of the strips constituting the negative electrode base layer is too large (300 µm), the diffusion distance and diffusion resistance of element B in the negative electrode base layer increase, and the cycle performance of the battery is deteriorated.

**Table 8**

| First-cycle efficiency | Cycle number | Sample | Element A | Element B | Structural form of negative electrode base layer | Strip thickness of negative electrode base layer (µm) | Areal density of negative electrode base layer (mg/cm²) |
|---|---|---|---|---|---|---|---|
| 89% | 513 | Ex. 33 | Na | Li | Strip | 0.05 | 5 |
| 90% | 529 | Ex. 34 | Mg | Ca | Strip | 1 | 5 |
| 93% | 571 | Ex. 35 | Na | Li | Strip | 50 | 5 |
| 91% | 533 | Ex. 36 | Mg | Ca | Strip | 100 | 5 |
| 90% | 502 | Ex. 37 | Na | Li | Strip | 200 | 5 |
| 88% | 482 | Cm. Ex. 16 | Mg | Ca | Strip | 0.01 | 5 |
| 90% | 472 | Cm. Ex. 17 | Na | Li | Strip | 300 | 5 |

As it can be seen from the test results of Examples 38 to 42 in Table 9 below, when element A is sodium and element B is lithium (Example 38, Na-Li), the mass percentage of element A in the negative electrode base layer is 99%, and the mass percentage of element B in the negative electrode base layer is 1%; when element A is sodium and element B is lithium (Example 39, Na-Li), the mass percentage of element A in the negative electrode base layer is 90%, and the mass percentage of element B in the negative electrode base layer is 10%; when element A is magnesium and element B is sodium (Example 40, Mg-Na), the mass percentage of element A in the negative electrode base layer is 70%, and the mass percentage of element B in the negative electrode base layer is 30%; when element A is sodium and element B is lithium (Example 41, Na-Li), the mass percentage of element A in the negative electrode base layer is 50%, and the mass percentage of element B in the negative electrode base layer is 50%; or when element A is magnesium and element B is sodium (Example 42, Mg-Na), the mass percentage of element A in the negative electrode base layer is 30%, and the mass percentage of element B in the negative electrode base layer is 70%, that is, when the mass percentage of element B in the negative electrode base layer is in the range of 0%-70%, the consumption of element B is inhibited during the battery cycling, and the battery cycle performance is better. As it can be seen from the test results of Comparative Examples 18 to 19 (Na-Li), when the mass percentage of element B in the negative electrode base layer is greater than 70% (i.e., 75% and 100%), the ability of the negative electrode base layer to dissolve element B decreases, and the diffusibility of element B in the negative electrode base layer is weak. Hence, the negative electrode base layer is difficult to effectively inhibit the formation of metal dendrites of element B, and the cycle performance of the battery is deteriorated.

**Table 9**

| First-cycle efficiency | Cycle number | Sample | Element A | Element B | Mass percentage of element A in negative electrode base layer | Mass percentage of element B in negative electrode base layer | Structural form of negative electrode base layer | Electrolyte concentration (mol/L) |
|---|---|---|---|---|---|---|---|---|
| 94% | 596 | Ex. 38 | Na | Li | 99% | 1% | Layered | 2 |
| 95% | 608 | Ex. 39 | Na | Li | 90% | 10% | Layered | 2 |
| 92% | 563 | Ex. 40 | Mg | Na | 70% | 30% | Layered | 2 |
| 90% | 526 | Ex. 41 | Na | Li | 50% | 50% | Layered | 2 |
| 90% | 516 | Ex. 42 | Mg | Na | 30% | 70% | Layered | 2 |
| 90% | 497 | Cm. Ex. 18 | Na | Li | 25% | 75% | Layered | 2 |
| 89% | 320 | Cm. Ex. 19 | Na | Li | 0% | 100% | Layered | 2 |

As it can be seen from the test results of Examples 43 to 47 in Table 10 below, when element A is sodium and element B is lithium (Example 43, Na-Li), and the atomic percentage of element A in the negative electrode base layer is 10%; when element A is magnesium and element B is sodium (Example 44, Mg-Na), and the atomic percentage of element A in the negative electrode base layer is 30%; when element A is sodium and element B is lithium (Example 45, Na-Li), and the atomic percentage of element A in the negative electrode base layer is 50%; when element A is magnesium and element B is sodium (Example 46, Mg-Na), and the atomic percentage of element A in the negative electrode base layer is 70%; or when element A is sodium and element B is lithium (Example 47, Na-Li), and the atomic percentage of element A in the negative electrode base layer is 100%, that is, when the atomic percentage of element A in the negative electrode base layer is in the range of 10% to 100%, the negative electrode base layer containing element A has a strong ability to dissolve element B, can effectively inhibit the growth of metal dendrites of element B, reduce the consumption of active element B during the regeneration of the A-based negative electrode protection film, and improve the cycle performance of the battery. As it can be seen from the test results of Comparative Example 20 (Mg-Na) and Comparative Example 21 (Na-Li), when the content of element A in the negative electrode base layer is less than 10%, the ability of the negative electrode base layer to dissolve element B is weak, and the effect of inhibiting the formation of metal dendrites of element B is poor. As a result, the cycle performance of the battery is poor.

**Table 10**

| First-cycle efficiency | Cycle number | Sample | Element A | Element B | Atomic percentage of element A in negative electrode base layer | Structural form of negative electrode base layer | Electrolyte concentration (mol/L) |
|---|---|---|---|---|---|---|---|
| 90% | 503 | Ex. 43 | Na | Li | 10% | Layered | 2 |
| 89% | 508 | Ex. 44 | Mg | Na | 30% | Layered | 2 |
| 92% | 562 | Ex. 45 | Na | Li | 50% | Layered | 2 |
| 92% | 572 | Ex. 46 | Mg | Na | 70% | Layered | 2 |
| 94% | 591 | Ex. 47 | Na | Li | 100% | Layered | 2 |
| 88% | 485 | Cm. Ex. 20 | Mg | Na | 8% | Layered | 2 |
| 89% | 336 | Cm. Ex. 21 | Na | Li | 2% | Layered | 2 |

As it can be seen from the test results of Examples 48 to 51 in Table 11 below, when element A is magnesium and element B is potassium (Example 48, Mg-K), and the electrolyte concentration is 0.5 mol/L; when element A is sodium and element B is lithium (Example 49, Na-Li), and the electrolyte concentration is 2 mol/L; when element A is magnesium and element B is potassium (Example 50, Mg-K), and the electrolyte concentration is 5 mol/L; or when element A is sodium and element B is lithium (Example 51, Na-Li), and the electrolyte concentration is 7 mol/L, that is, when the electrolyte concentration is in the range of 0.5 mol/L to 7 mol/L, the electrolyte has good conductivity for the ions of element B and good film-forming effect, can effectively inhibit the formation of metal dendrites of element B, and inhibit the occurrence of side reactions in the battery. Hence, the battery has a long cycle life. As it can be seen from the test results of Comparative Example 22 (Na-Li), when the concentration of the electrolyte is too low (0.2 mol/L), the ionic conductivity of the electrolyte is low, and the concentration polarization in the battery during cycling is severe. As a result, the cycle life of the battery is short. As it can be seen from the test results of Comparative Example 23 (Na-Li), when the concentration of the electrolyte is too high (8mol/L), the viscosity of the electrolyte is too high, the ionic conductivity of the electrolyte is low, and the polarization in the battery is severe. As a result, the cycle life of the battery is reduced.

**Table 11**

| First-cycle efficiency | Cycle number | Sample | Element A | Element B | Electrolyte concentration (mol/L) | Structural form of negative electrode base layer | Areal density of negative electrode base layer (mg/cm²) |
|---|---|---|---|---|---|---|---|
| 91% | 530 | Ex. 48 | Mg | K | 0.5 | Layered | 5 |
| 94% | 591 | Ex. 49 | Na | Li | 2 | Layered | 5 |
| 93% | 551 | Ex. 50 | Mg | K | 5 | Layered | 5 |
| 93% | 504 | Ex. 51 | Na | Li | 7 | Layered | 5 |
| 80% | 308 | Cm. Ex. 22 | Na | Li | 0.2 | Layered | 5 |
| 93% | 475 | Cm. Ex. 23 | Na | Li | 8 | Layered | 5 |

As it can be seen from the test results of Examples 52 to 54 in Table 12 below, when element A is sodium and element B is lithium (Example 52, Na-Li), the anion for forming the negative electrode protection film is PF₆⁻, and the main component of the negative electrode protection film is sodium fluoride; when element A is sodium and element B is lithium (Example 53, Na-Li), the anion for forming the negative electrode protection film is BF₄⁻, and the main component of the negative electrode protection film is sodium fluoride; or when element A is sodium and element B is lithium (Example 54, Na-Li), the anion for forming the negative electrode protection film is AsF₆⁻, and the main component of the negative electrode protection film is sodium fluoride, that is, when the electrolyte contains at least one anion that is a fluorine-containing anion, and the main component of the A-based negative electrode protection film is metal fluoride, the secondary battery has good cycle performance. The resistance to the migration of the ions of element B in the A-based negative electrode protection film is small, and the A-based negative electrode protection film can effectively prevent the side reaction between the negative electrode base layer and the electrolyte, thereby reducing the consumption of the active species in the battery. As it can be seen from the test results of Comparative Example 24 (Na-Li), when the main component of the A-based negative electrode protection film is not metal fluoride, the ions of element B have to overcome large resistance to pass through the A-based negative electrode protection film, and the side reaction between the negative electrode base layer and the electrolyte is exacerbated, resulting in the formation of metal dendrites and the consumption of the active species. As a result, the cycle performance of the battery is deteriorated.

**Table 12**

| First-cycle efficiency | Cycle number | Sample | Element A | Element B | Main component of negative electrode protection film | Anion for forming negative electrode protection film | Areal density of negative electrode base layer (mg/cm²) |
|---|---|---|---|---|---|---|---|
| 94% | 591 | Ex. 52 | Na | Li | Sodium fluoride | Hexafluoropho sphate | 5 |
| 93% | 543 | Ex. 53 | Na | Li | Sodium fluoride | Tetrafluorobor ate | 5 |
| 93% | 555 | Ex. 54 | Na | Li | Sodium fluoride | Hexafluoroarse nate | 5 |
| 82% | 314 | Cm. Ex. 24 | Na | Li | Sodium oxide | Nitrate | 5 |

### Test Methods

### 1. Specific surface area S_{negative}

According to the national standard "GB/T 19587-2004 Determination of the specific surface area of solids by gas adsorption using the BET method", the test was carried out using an adsorption characterization analyzer. A powder sample to be tested was placed in a U-shaped sample tube, and a mixed gas containing a certain proportion of an adsorbate was passed through the sample. The amount of the adsorbate molecules (N₂) adsorbed by the sample to be tested was determined based on the change in the gas concentration before and after adsorption, thereby obtaining the specific surface area S_{negative}.

### 2. Median particle size D_{50negative}

The median particle size D_{50negative} is the median particle size of the metal or alloy particles constituting the negative electrode base layer, and the unit is µm. D_{50negative} is the particle size corresponding to the cumulative volume percentage of the metal or alloy particles in the negative electrode base layer reaching 50%. The test was carried out according to the national standard "GB/T 19077-2016 Particle size analysis -- Laser diffraction methods". After the sample was dispersed by pressure, the particle size of the material was characterized by a laser particle size analyzer. In the test results, the median particle size D_{50negative} was used to represent the average particle size.

### 3. Roughness Ra

The roughness used herein refers to the microscopic geometric features consisting of tiny peaks and valleys with small spacing that are still present on the processed surface of the inactive layer. The "roughness Ra" herein is a parameter representing the surface roughness of an industrial product, and is represented by the "arithmetic mean roughness Ra" specified in Japanese Industrial Standard (JIS B 0601-1994). It may be measured using, for example, a surface roughness gauge or a confocal laser microscope. The surface roughness of the inactive negative electrode base layer, Ra, satisfies 0.01 µm ≤ Ra ≤ 250 µm.

### 4. Porosity

The volume of a negative electrode plate was calculated according to its size. The negative electrode plate was weighed to obtain its dry mass mₚ. Thus, the dry density ρₚ of the negative electrode plate was calculated. Then, the negative electrode plate was soaked in an inert organic solvent (for example, ethylene glycol dibutyl ether) for 10 hours. The negative electrode plate was taken out to wipe off the flowing liquid on the surface of the negative electrode plate, and weighed to obtain its wet weight. The mass mₐ of ethylene glycol dibutyl ether absorbed by the negative electrode plate was determined based on the difference between the wet weight and the dry weight. The density ρₐ of ethylene glycol dibutyl ether is a known parameter. Based on the above parameters, the porosity of the negative electrode plate was calculated.

As it can be seen, the overall porosity takes into account the total porosity of the substrate layer and the coating. Nevertheless, provided that the other components in the substrate layer and coating remain unchanged in the various negative electrode plates, the total porosity reflects in a very intuitive manner the porosity of the negative electrode base layer in the negative electrode plate of the present invention.

### 5. Areal density of negative electrode base layer

A square negative electrode base layer having a size of 10 cm*10 cm was weighed to obtain its mass, which was then divided by its area to obtain the areal density.

### 6. Thickness of negative electrode base layer

A square negative electrode plate having a size of 10cm*10cm was placed between two stainless steel sheets each having a size of 10cm*10cm and a well-defined uniform thickness H₁, with the edges and corners aligned. The total thickness H₂ of the two stainless steel sheets plus the negative electrode plate was measured. The thickness H₃ of the negative electrode plate was obtained according to the formula H₃=H₂-2H₁. When the negative electrode plate was coated on both sides, the approximate thickness H₅ of the negative electrode base layer was obtained according to the formula H₅=(H₃-H₄)/2, where H₄ was the thickness of the current collector; when the negative electrode plate was coated on one side, the approximate thickness H₅ of the negative electrode base layer was obtained according to the formula H₅=H₃-H₄, where H₄ was the thickness of the current collector.

### 7. Cycle performance test

At 25°C, the secondary batteries prepared in the Examples and Comparative Examples were subjected to full charge/full discharge cycle tests at a rate of 0.5C. While the cycle test was performed this way, the cycle number was recorded when the battery capacity was less than or equal to 80% of the initial capacity, which was recorded as the n^{th} cycle. The larger n is, the better the cycle performance of the battery. The n of greater than 530 cycles indicates excellent cycle capability, n in the range of 500-530 cycles indicates average cycle capability, and n of less than 500 cycles indicates poor cycle capability.

## Claims

1. A secondary battery, comprising a positive electrode plate, an electrolyte and a negative electrode plate, wherein
the negative electrode plate comprises a negative electrode base layer comprising at least one inactive layer containing element A;
the electrolyte comprises element B as an active species;
wherein the element A is at least one of sodium, potassium, magnesium and calcium, and the element B is at least one of lithium, sodium, potassium, magnesium and calcium;
wherein the element B is different from the element A, and the element B has a lower redox potential than the element A.

2. The secondary battery of claim 1, further comprising an A-based negative electrode protection film located on at least a portion of a surface of the negative electrode base layer.

3. The secondary battery of claim 2, wherein the negative electrode plate further comprises a negative electrode reinforcement film located on at least a portion of a surface of the A-based negative electrode protection film.

4. The secondary battery of claim 3, wherein the negative electrode reinforcement film is a species that does not chemically react with the electrolyte.

5. The secondary battery of claim 3, wherein the negative electrode reinforcement film is a species that does not chemically react with a metal of the element B and/or the inactive layer containing the element A.

6. The secondary battery of any one of claims 1-5, wherein the negative electrode plate satisfies at least one of the following conditions:
(1) a specific surface area S_{negative} of the negative electrode base layer satisfies 0.001 m²/g≤S_{negative}≤100 m²/g;
(2) a surface roughness R_{negative} of the negative electrode base layer satisfies 0.01µm≤R_{negative}≤250µm;
(3) a porosity K_{negative} of the negative electrode base layer satisfies 0%≤K_{negative}≤50%;
(4) a thickness d_{negative} of the negative electrode base layer satisfies: 2 µm ≤ d_{negative} ≤ 500 µm;
(5) an areal density C_{negative} of the negative electrode base layer satisfies: 0.2 mg/cm²≤C_{negative}≤50 mg/cm²;
(6) a median particle size D_{50negative} of particles of the negative electrode base layer satisfies 0.05µm≤D_{50negative}≤200µm;
(7) the negative electrode base layer has a striped structure, and a stripe has a minimum dimension in the range of 0.05 µm to 200 µm;
(8) an atomic percentage of the element A in the negative electrode base layer is between 10% and 100%; or
(9) a mass percentage of the element B in the negative electrode base layer is between 0% and 70%.

7. The secondary battery of any one of claims 1-5, wherein the inactive layer containing element A exists with the element B in any one of the following combinations: magnesium inactive layer and sodium element; magnesium inactive layer and lithium element; magnesium inactive layer and potassium element; magnesium inactive layer and calcium element; sodium inactive layer and potassium element; sodium inactive layer and lithium element; sodium inactive layer and calcium element; calcium inactive layer and potassium element; calcium inactive layer and lithium element; or potassium inactive layer and lithium element.

8. The secondary battery of any one of claims 1-5, further comprising a separator, wherein a second negative electrode reinforcement film is provided on at least a portion of the separator; and/or at least a portion of the separator itself is a second negative electrode reinforcement film.

9. The secondary battery of any one of claims 1-5, wherein the inactive layer containing element A is in the form of a lamellar structure, a strip structure, a three-dimensional structure, and/or a particle structure.

10. The secondary battery of any one of claims 1-5, wherein the negative electrode base layer further comprises element B dissolved in at least one inactive layer containing element A, and the element B is 0-70% by mass based on a total mass of the negative electrode base layer.

11. The secondary battery of any one of claims 1-5, wherein an active material of the positive electrode plate does not undergo a reversible electrochemical reaction with ions of element A or preferentially undergoes a reversible electrochemical reaction with ions of element B.

12. The secondary battery of any one of claims 1-5, wherein an active material of the positive electrode plate is of a polyanion salt type, a metal oxide type or a compound type.

13. The secondary battery of any one of claims 1-5, wherein the electrolyte comprises at least one anion selected from fluoride-containing anions.

14. The secondary battery of claim 13, wherein the at least one anion of the electrolyte is at least one selected from bis(fluorosulfonyl)imide anion, hexafluorophosphate, bis(trifluoromethanesulfonyl)imide anion, difluorooxalatoborate, tetrafluoroborate, hexafluoroarsenate and difluorophosphate.

15. The secondary battery of any one of claims 1-5, wherein a solvent of the electrolyte is selected from at least one of ether compounds, acetal compounds, and ketal compounds.

16. The secondary battery of any one of claims 1-5, wherein the electrolyte has a concentration in the range of 0.5 mol/L to 7 mol/L.

17. An electric apparatus, comprising the secondary battery of any one of claims 1-16.
